# FASCICULE DE BREVET EUROPEEN

(11) **EP 2 118 167 B1**
(45) Date de publication et mention de la délivrance du brevet: **14.08.2013**
(21) Numéro de dépôt: 08762103.3
(22) Date de dépôt: 15.02.2008
(51) Int. Cl.: C08G 63/08, C08G 63/82, C08G 63/81, C08G 69/16, C08G 69/14, D01F 6/62, D01F 6/60, A61K 47/34, C08L 101/00, C08L 77/02, C08L 67/04

(54) **PROCÉDÉ DE PRÉPARATION DE POLYLACTONES ET POLYLACTAMES**
VERFAHREN ZUR HERSTELLUNG VON POLYLAKTONEN UND POLYLAKTAMEN
METHOD FOR PRODUCING POLYLACTONES AND POLYLACTAMS

(30) Priorité: 16.02.2007 FR 0701148
(43) Date de publication de la demande: 18.11.2009
(73) Titulaire: ARKEMA FRANCE, 92700 Colombes (FR); Centre National de la Recherche Scientifique - CNRS, 75794 Paris Cedex 16 (FR)
(72) Inventeur: MAGNET, Stéphanie, F-64370 Morlanne (FR); NAVARRO, Christophe, F-64990 Lahonce (FR); GAZEAU-BUREAU, Stéphanie, F-31270 Frouzins (FR); MARTIN-VACA, Blanca, F-31100 Toulouse (FR); BOURISSOU, Didier, F-31830 Plaisance du Touch (FR)
(86) Numéro de dépôt international: PCT/FR2008/050255
(87) Numéro de publication internationale: WO 2008/104723

(56) Documents cités:
- EP-A- 0 596 704
- EP-A1- 1 614 714
- WO-A-00/77072
- GB-A- 766 347
- GB-A- 1 201 909
- GB-A- 1 251 046
- US-A- 2 879 260
- US-A- 2 977 385
- US-A- 3 655 631
- US-A- 3 721 652
- US-A- 4 316 001
- US-A- 4 629 624
- DATABASE WPI Week 198522 Thomson Scientific, London, GB; AN 1985-130939 XP002452273 -& JP 60 067446 A (TOA GOSEI CHEM IND LTD) 17 avril 1985 (1985-04-17)
- BASKO M., KUBISA P.: "Cationic copolymerization of e-caprolactone and L,L-lactide by an activated monomer mechanism" JOURNAL OF POLYMER SCIENCE: PART A; POLYMER CHEMISTRY, vol. 44, 2006, pages 7071-7081, XP002452269 cité dans la demande
- DATABASE WPI Week 199502 Thomson Scientific, London, GB; AN 1995-009653 XP002452274 -& JP 06 293824 A (DAICEL CHEM IND LTD) 21 octobre 1994 (1994-10-21)
- DATABASE WPI Week 199125 Thomson Scientific, London, GB; AN 1991-181472 XP002452275 -& JP 03 109419 A (JAPAN ATOMIC ENERGY RES INST) 9 mai 1991 (1991-05-09)
- DATABASE WPI Week 198614 Thomson Scientific, London, GB; AN 1986-091247 XP002451530 -& JP 61 037814 A (DAICEL CHEM IND LTD) 22 février 1986 (1986-02-22)
- DATABASE WPI Week 199950 Thomson Scientific, London, GB; AN 1999-585977 XP002451535 -& JP 11 255870 A (DAICEL CHEM IND LTD) 21 septembre 1999 (1999-09-21)
- DATABASE WPI Week 200706 Thomson Scientific, London, GB; AN 2007-045950 XP002451536 -& CN 1 775 817 A (UNIV SHANGHAI JIAOTONG) 24 mai 2006 (2006-05-24)

## Description

La présente invention concerne un procédé de préparation d'homopolymères de lactones et de lactames.

Les polycaprolactones sont des polymères présentant un intérêt industriel certain dans divers domaines, en raison notamment de leur biocompatibilité, de leurs propriétés physico-chimiques et de leur bonne stabilité thermique jusqu'à des températures d'au moins 200-250°C.

Classiquement, la préparation d'homopolymères par ouverture de cycle fait appel à des mécanismes de polymérisation ionique ou des mécanismes de polymérisation par coordination insertion. Ces polymérisations sont principalement amorcées par des complexes métalliques tels que des alkyl ou aryl alcalins (dans le cas de la polymérisation anionique), ou des alcoolates métalliques (dans le cas de la polymérisation par coordination/insertion). Dans ces derniers, on peut citer les dérivés de l'aluminium, de l'étain, du zinc, du fer, du scandium, du titane ou de l'yttrium. Les dérivés métalliques peuvent éventuellement assister l'attaque de l'alcoolate sur le monomère par coordination de la fonction réactive du cycle (fonction ester ou amide respectivement dans les cas de lactones ou lactames). Penczek et al. décrivent dans Macromol. SymP, 128, 241-254 (1998) la préparation de polyesters par ouverture de cycle en présence d'alcoolates d'aluminium. En 2000, Hawker et al. proposent l'ouverture de lactames par des complexes d'étain, titane et de magnésium (Macromol. SymP, 157, 71-76 (2000). En 2002, Jérôme et al. décrivent la préparation de polylactones et polylactides par ouverture de cycle à l'aide d'alcoolates de dialkyl aluminium (Macromol. SymP, 177 43-59 (2002). Plus récemment, les brevets JP2005042059, JP2005042058 revendiquent l'utilisation de dérivés du titane (tétraisopropoxyde de titane) comme catalyseurs métalliques d'ouverture de cycle d'ε-caprolactone.

Cependant, la présence de composés métalliques mis en oeuvre dans ces procédés de polymérisation peut avoir un effet néfaste sur la stabilité et/ou les performances des polymères synthétisés du fait d'interactions potentielles avec la matrice polymérique ou avec d'autres éléments entrant dans la formulation dans l'application. Il est d'ailleurs bien connu que les sels métalliques catalysent la dégradation de matrices polymériques telles que le polycarbonate lors de leur mise en oeuvre, ou sont indésirables lorsque ces polymères sont utilisés dans des applications biomédicales.

Il est donc nécessaire d'opérer une étape de purification du milieu réactionnel final pour éliminer les traces métalliques résiduelles. Cette étape de traitement pos-polymérisation est particulièrement délicate et peut s'avérer onéreuse pour une efficacité parfois discutable.

Des procédés alternatifs n'ayant pas recours à des catalyseurs métalliques ont alors été proposés. Ces procédés mettent en oeuvre des acides qui jouent le rôle de catalyseur en activant la fonction réactive du monomère (fonction ester ou amide respectivement dans les cas de lactones ou lactames). Ces mécanismes de polymérisation cationique permettent alors de s'affranchir de l'utilisation de complexes organométalliques dans le milieu réactionnel.

En particulier, il a été suggéré par Endo et al., Macromol, 2000, 33, 4316-4320 et Jérome et al., Macromol, 2002, 35, 1190-1195 de polymériser l'ε-caprolactone en présence d'acide chlorhydrique éthéré (HCl•Et₂O) et de n-butanol dans le dichlorométhane à 25°C. Les premiers auteurs utilisent une concentration en monomère de 1 mol.l⁻¹, jusqu'à 5 équivalents d'acide par rapport à l'alcool, et obtiennent après 24h des polymères de masses maximales Mₙ de 10.300 g/mol (mesurée par chromatographie par perméation de gel, ou GPC), avec un indice de polydispersité de 1,15. Les seconds auteurs utilisent une concentration en monomère de 4 mol.l⁻¹, 3 équivalents d'acide par rapport à l'alcool, et les polymères obtenus après 29h présentent des masses maximales Mₙ de 11.000 g/mol (soit environ 20.000 avec une calibration au polystyrène) et un indice de polydispersité de 1,25.

Dans la littérature, seules des polycaprolactones ayant des masses moléculaires Mₙ inférieures à 15.000 g/mol ont été synthétisées suivant le procédé ci-dessus. En outre, la mise en oeuvre de ce procédé nécessite des temps de réaction très longs qui affectent négativement l'économie de ces procédés et l'utilisation d'un acide corrosif qui peut altérer les appareillages utilisés.

D'autres procédés de polymérisation cationique d'ε-caprolactone ont été proposés, qui font intervenir un acide sulfonique comme catalyseur au lieu de l'acide chlorhydrique.

Ainsi, Jones et al., Macromol, 2004, 37, 9709-9714 ont publié la polymérisation d'ε-caprolactone en présence d'acide para-toluènesulfonique et d'alcool benzylique dans le toluène à 52°C pour conduire après 5h30 à des polymères de masses Mₙ inférieures à 9.500 g/mol avec un indice de polydispersité de 1,61. Ils ont aussi utilisé des acides n-propylsulfoniques supportés sur silice dans les mêmes conditions, mais les polymères obtenus présentaient des masses inférieures à 6.500 g/mol pour des temps de polymérisation supérieurs à 27h.

Ces procédés ne permettent pas non plus de préparer des polycaprolactones de masse moléculaire Mₙ éventuellement élevée, avec un faible indice de polydispersité. La réaction est en effet habituellement difficile à contrôler, des réactions indésirables de transestérification pouvant notamment se produire, de sorte qu'il n'est pas toujours aisé d'obtenir des polymères ayant l'homogénéité de longueur de chaîne attendue. Ces procédés présentent en outre l'inconvénient de devoir être mis en oeuvre à chaud, ce qui peut être préjudiciable à leur économie.

Un autre procédé d'homopolymérisation de caprolactone a été décrit par Maigorzata Basko et al. dans Journal of Polymer Science : Part A : Polymer Chemistry, Vol. 44, 7071-7081 (2006). Il consiste à faire réagir l'ε-caprolactone en présence d'alcool isopropylique et d'acide trifluorométhanesulfonique (triflique), dans le dichlorométhane à 35°C. Une polycaprolactone ayant une masse moléculaire Mₙ de 3.100 g/mol et un indice de polydispersité de 1,05 peut ainsi être obtenue. Si ce procédé permet de limiter les réactions de transestérification, il présente toutefois l'inconvénient d'avoir une cinétique trop lente, en particulier pour des masses moléculaires Mₙ élevées.

Il serait donc intéressant de disposer d'un nouveau procédé permettant de préparer des polycaprolactones et également d'autres polylactones et polylactames de faible indice de polydispersité, ayant éventuellement une masse moléculaire Mₙ élevée, selon un procédé économique impliquant en particulier des temps de réaction courts et de préférence une température relativement basse, et en l'absence de toute trace d'espèce métallique.

Or, la Demanderesse a découvert que ce besoin pouvait être satisfait en utilisant certains acides sulfoniques particuliers comme catalyseurs et en mettant en oeuvre le procédé dans un solvant non chloré. Si JP-A-600 67 446 décrit un système de polymérisation de macromonomére acrylates dans le toluène, il utilise l'isopropanol comme amorceur et vise l'utilisation de ces macromonomères dans les resins thermodurciçable ce qui n'est pas le cas de la presente demande.

La présente invention a ainsi pour objet un procédé de préparation d'une polylactone ou polylactame, comprenant l'étape consistant à faire réagir une lactone ou lactame avec un amorceur caractérisé en ce que l'amorceur est choisi parmi l'isorbide, le xylitol, le mannitol, le maltitol, l'érythritol, le fructose, le ribose et le glucose, le méthane thiol, le n-propyl mercaptan, l'isopropyl mercaptan, le butyl mercaptan, le pentyl mercaptan, le n-octyl mercaptan, le t-nonyl mercaptan, le n-dodécyl mercaptan, le t-dodécyl mercaptan, le 2-mercaptoéthanol, le 2-(4-méthylcyclohex-3-ényl) propane-2-thiol et leurs mélanges, le dit procédé étant conduit dans un solvant aromatique non chloré, en présence d'un acide sulfonique de formule R-SO₃H où R désigne :
- un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
- un groupe aryle éventuellement substitué par au moins :

- un substituant alkyle linéaire renfermant de 2 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
- un groupement halogéné choisi parmi le fluor, le chlore, le brome ou l'iode, ou
- un groupement nitro, ou
- un groupement CR₁R₂R₃ où R₁ désigne un atome d'halogène et R₂, R₃ désignent indépendamment un atome d'hydrogène ou un atome d'halogène.

L'invention a également pour objet une composition de polymère susceptible d'être obtenue suivant le procédé ci-dessus et qui sera maintenant décrit plus en détail.

Le procédé selon l'invention peut être qualifié d'organo-catalytique.

En préambule, il est précisé que l'expression « compris(e) entre » utilisée dans le cadre de cette description doit s'entendre comme incluant les bornes citées.

Le procédé selon l'invention comprend la réaction d'une lactone ou lactame avec un amorceur non polymérique, ci-après désigné plus simplement par « amorceur ». Par « amorceur », on entend dans la présente description un composé comportant au moins une fonction hydroxyle ou au moins une fonction thiol. Le terme « polymérique » se réfère à une molécule dont la structure comprend essentiellement la répétition multiple d'unités dérivées, effectivement (par tout type de réaction de polymérisation) ou conceptuellement, de molécules de plus faible masse moléculaire. Ce terme englobe aussi bien les polymères (macromolécules) que les oligomères, ces derniers ayant une masse moléculaire plus faible que les premiers.

Par « homopolymère », on entend en particulier un polymère dérivé d'une espèce seulement de monomère.

Des exemples de lactones comprennent plus particulièrement les β-, γ-, δ- et ε-lactones saturées ou insaturées, substituées ou non substituées, comportant de 4 à 12 atomes de carbone, telles que l'ε-caprolactone, la δ-valérolactone, la β-butyrolactone et la γ-butyrolactone. L'ε-caprolactone est préférée pour une utilisation dans la présente invention. Elle peut notamment être obtenue par oxydation de Baeyer-Villiger de la cyclohexanone avec l'acide peracétique.

Des exemples de lactames comprennent plus particulièrement les β-, γ-, δ- et ε-lactames saturées ou insaturées, substituées ou non substituées, renfermant de 4 à 12 atomes de carbone, telles que la caprolactame, la pyrrolidinone, la pipéridone, l'énantholactame et la laurinlactame. La caprolactame est préférée pour une utilisation dans la présente invention. Elle peut être obtenue à partir de cyclohexanoxime, par arrangement de Beckmann, et conduit par polymérisation à la polycaprolactame ou Nylon-6^{®}.

La concentration de la lactone ou lactame dans le milieu réactionnel peut varier dans une certaine mesure. Il a ainsi été démontré que pour un degré de polymérisation voisin de 40, une concentration élevée en monomère permettait un meilleur contrôle de l'amorçage de la polymérisation par l'amorceur et donc un meilleur contrôle de la polymérisation. Au contraire, dans le cas de degrés de polymérisation plus élevés (notamment supérieurs à 100), un milieu plus dilué en monomère peut devenir plus favorable à un meilleur contrôle. A titre d'exemple, la concentration en lactone ou lactame dans le milieu réactionnel peut varier de 0,01 à 9 mol/l et de préférence de 0,45 à 3 mol/l voire de 0,45 à 2,7 mol/l.

L'amorceur peut être un composé de formule CH(Ra)(Rb)(XH) où X désigne O ou S ; Ra, Rb désignent indépendamment un atome d'hydrogène, un groupe alkyle linéaire ou ramifié en C₁-C₂₂, de préférence en C₁-C₆, un groupe aryle tel que notamment phényle ou naphtyle, ou un groupe aryle-alkyle dont la chaîne alkyle renferme de 1 à 22 atomes de carbone ; Ra et Rb pouvant indépendamment porter au moins un groupe XH tel que défini précédemment.

Selon une forme d'exécution préférée de l'invention, l'amorceur comporte au moins une fonction hydroxyle (X=O) et il s'agit en particulier d'un alcool primaire (Rb = H), par exemple choisi parmi : le méthanol, l'éthanol, le n-propanol, le n-butanol, le n-pentanol, le n-hexanol, l'alcool néopentylique, l'alcool benzylique et leurs mélanges, en particulier lorsque la lactone est l'ε-caprolactone.

L'amorceur peut aussi être issu de la famille des composés naturels de faible masse ou bio-ressourcés hydroxylés, parmi lesquels on peut citer le bio-éthanol, l'amidon, la chitine, le chitosan, le dextran, la cellulose, le propanediol, le glycérol, le propylène glycol, l'isorbide, le xylitol, le mannitol, le maltitol, l'érythritol et d'une façon plus générale, les molécules naturelles de la famille des oses, tels que le fructose, le ribose et le glucose.

En variante, l'amorceur peut comporter au moins une fonction thiol et être par exemple choisi parmi : le méthane thiol, le n-propyl mercaptan, l'isopropyl mercaptan, le butyl mercaptan, le pentyl mercaptan, le n-octyl mercaptan, le t-nonyl mercaptan, le n-dodécyl mercaptan, le t-dodécyl mercaptan, le 2-mercaptoéthanol, le 2-(4-méthylcyclohex-3-ényl) propane-2-thiol et leurs mélanges.

De préférence, le rapport molaire de la lactone ou lactame à l'amorceur non polymérique va de 5 à 500, plus préférentiellement de 10 à 200 et, mieux, de 40 à 100.

Le procédé selon l'invention est avantageusement réalisé en milieu anhydre, et en tout cas dans un solvant non chloré, de préférence dans un solvant aromatique tel que le toluène, l'éthylbenzène ou le xylène, ou en variante dans un solvant non aromatique tel que les cétones (dont la méthyléthylcétone et la méthylisobutylcétone) et les éthers et polyéthers éventuellement cycliques (dont le méthyl tertio-butyl éther, le tétrahydrofurane, le dioxane et le diméthoxyéthane). Le toluène est préféré pour une utilisation dans la présente invention. Il a en effet été démontré que ce type de solvant permettait notamment d'accélérer la polymérisation.

En outre, les réactifs utilisés dans ce procédé sont de préférence séchés avant leur mise en oeuvre, notamment par traitement sous vide, distillation ou séchage par un dessicant inerte.

Le procédé selon l'invention nécessite l'emploi d'un catalyseur, qui comprend ou est de préférence constitué, d'un acide sulfonique de formule R-SO₃H tel que défini précédemment, en particulier d'acide (trifluoro)méthane sulfonique, c'est-à-dire d'acide méthane sulfonique ou trifluorométhane sulfonique. Par l'expression « acide sulfonique », on entend un composé sous forme d'acide libre et non sous forme de sel. Le catalyseur est avantageusement ajouté au milieu réactionnel après introduction de la lactone ou lactame et de l'amorceur. Il s'agit préférentiellement d'un processus de catalyse homogène, en ce sens que le catalyseur se présente habituellement dans la même phase que les réactifs (lactone ou lactame, et amorceur) et non sous forme supportée. Il est possible de faire varier la quantité de catalyseur mise en oeuvre dans le procédé pour ajuster le temps de réaction sans affecter le contrôle de la polymérisation. Habituellement, on préfère toutefois que le rapport molaire de l'acide sulfonique de formule R-SO₃H à chaque fonction hydroxyle ou thiol de l'amorceur soit compris entre 0,5 et 1. Le catalyseur peut être aisément éliminé en fin de réaction par neutralisation à l'aide d'une base organique encombrée telle que la diisopropyléthylamine (DIEA) puis élimination des sels d'ammonium ainsi formés, de préférence par lavage aqueux.

On préfère que le procédé selon l'invention ne mette pas en oeuvre d'espèce métallique.

Ce procédé est de préférence conduit à une température allant de 20 à 105°C, plus préférentiellement de 25°C à 65°C et, mieux, de 25°C à 50°C. Il a en effet été démontré qu'il était possible d'obtenir à ces températures, par exemple à environ 30°C, des homopolymères de lactone ou lactame ayant des masses moléculaires Mₙ supérieures à 15.000 g/mol en 2 à 7 heures seulement, et avec un rendement d'au moins 90%, voire de près de 99%, sans qu'il soit nécessaire de travailler sous pression. Il s'agit là d'un avantage considérable du procédé selon l'invention.

Ce procédé est en outre de préférence conduit sous agitation. Il peut être mis en oeuvre en continu ou de façon discontinue.

Les homopolymères préparés selon la présente invention présentent une masse moléculaire moyenne en nombre notée Mn, mesurée par chromatographie par perméation de gel (ou GPC) et contrôlée par le rapport molaire du monomère à l'amorceur, qui peut être supérieure à 15.000 g/mol. Ils présentent en outre un indice de polydispersité, traduisant la bonne homogénéité des longueurs de chaîne du polymère, inférieur à 1,5.

Ces polymères peuvent être utilisés dans une diversité d'applications, et en particulier comme membranes pour le traitement d'effluents liquides ou gazeux ou dans des systèmes électrochimiques de stockage d'énergie tels que des batteries lithium-ion, des supercondensateurs ou des piles à combustibles ; comme matériaux biocompatibles utilisables notamment dans le domaine pharmaceutique ou cosmétique, en particulier pour la fabrication de systèmes de vectorisation d'actifs ou comme matériaux de suture ; comme additifs dans les matières plastiques et en particulier comme additifs antistatiques pour des résines polymères comme les polyesters, les polycarbonates, les polyamides ou les poly(meth)acrylates, comme composés améliorant la résistance aux chocs des résines telles que les polycarbonates transparents ou non, les polyesters, les polyamides ou les poly(meth)acrylates, ou comme plastifiants du PVC ; ou encore pour la fabrication de fibres textiles.

L'invention concerne donc également l'utilisation d'une composition de polymère susceptible d'être obtenue suivant le procédé décrit précédemment, comme additif antistatique de résines polymères.

Elle concerne en outre l'utilisation de cette composition dans la fabrication d'une membrane pour le traitement d'effluents liquides ou gazeux ou dans des systèmes électrochimiques de stockage d'énergie ; comme matériau biocompatible dans le domaine pharmaceutique ou cosmétique ; comme additif améliorant la résistance aux chocs des résines ou comme plastifiant du PVC ; ou pour la fabrication de fibres textiles.

L'invention sera maintenant illustrée par les exemples non limitatifs suivants.

### EXEMPLES

### Exemple 1 : Préparation d'homopolymères d'ε-caprolactone

La procédure générale suivante a été utilisée pour mettre en oeuvre les procédés décrits ci-après.

Les alcools et le toluène ont été distillés sur sodium. L'ε-caprolactone et la δ-valérolactone ont été séchées et distillées sur CaH₂. Les acides sulfoniques ont été utilisés sans purification complémentaire. La diisopropyl éthylamine (DIEA) a été séchée et distillée sur dihydrure de calcium (CaH₂) et conservée sur hydroxyde de potassium (KOH).

Les tubes de Schlenk ont été séchés au pistolet chauffant sous vide afin d'éliminer toute trace d'humidité.

La réaction a été suivie par RMN ¹H, réalisée sur un appareil BRUKER AVANCE 300, et GPC, effectuée sur un appareil WATERS 712 WISP, réglé à 40°C, 1 ml/min, en utilisant un étalonnage au polystyrène. Pour ce faire, des échantillons ont été prélevés, neutralisés à la DIEA, évaporés et repris dans un solvant adéquat en vue de leur caractérisation. La RMN ¹H permet de quantifier les degrés de polymérisation des monomères (DP) en faisant le rapport d'intégration des signaux des 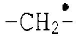 portant la fonction C=O aux signaux des protons des -CH₂- portant la fonction -OH initialement sur l'amorceur. Les spectres sont enregistrés dans le chloroforme deutéré, sur un spectromètre à 300 MHz. La GPC dans le THF permet de déterminer la masse moléculaire moyenne en nombre Mₙ et le degré de polydispersité (PDI) des échantillons.

### Exemple 1A :

A une solution d'ε-caprolactone (200µl, 10éq., 2,7 mol.l⁻¹) dans le toluène (0,43ml), sont ajoutés successivement le n-pentanol (20µl, 1éq.) et l'acide trifluorométhanesulfonique (16µl, 1éq.). Le milieu réactionnel est agité sous argon à 30°C jusqu'à conversion totale du monomère établie à partir de la RMN, soit 20min.
Conversion : ≥ 99%
RMN ¹H: DP = 11
GPC : Mₙ = 2.200 g/mol, PDI = 1,19

### Exemple 1B :

A une solution d'ε-caprolactone (1ml, 40éq., 2,7 mol.l⁻¹) dans le toluène (2,3ml), sont ajoutés successivement le n-pentanol (25µl, 1éq.) et l'acide trifluorométhanesulfonique (20µl, 1éq.). Le milieu réactionnel est agité sous argon à 30°C jusqu'à conversion totale du monomère établie à partir de la RMN, soit 1h.
Conversion : 100%
RMN ¹H: DP = 39
GPC . Mₙ = 8.000 g/mol, PDI = 1,16

### Exemple 1C :

A une solution d'ε-caprolactone (1ml, 100éq., 0,9 mol.l⁻¹) dans le toluène (9ml), sont ajoutés successivement le n-pentanol (10µl, 1éq.) et l'acide trifluorométhanesulfonique (8µl, 1éq.). Le milieu réactionnel est agité sous argon à 30°C jusqu'à conversion totale du monomère établie à partir de la RMN, soit 6h20.
Conversion : ≥ 99%
RMN ¹H : DP = 7 5
GPC : Mₙ = 19.170 g/mol, PDI = 1,19

### Exemple 1D :

A une solution d'ε-caprolactone (1ml, 100éq., 2,7 mol.l⁻¹) dans le toluène (2,3ml), sont ajoutés successivement le n-pentanol (10µl, 1éq.) et l'acide méthanesulfonique (6µl, 1éq.). Le milieu réactionnel est agité sous argon à 30°C jusqu'à conversion totale du monomère établie à partir de la RMN, soit 5h30.
Conversion : 100%
RMN ¹H : DP = 79
GPC : Mₙ = 16.700 g/mol, PDI = 1,23

### Exemple 1E :

A une solution d'ε-caprolactone (510µl, 10éq., 2,7 mol.l⁻¹) dans le toluène (1,1ml), sont ajoutés successivement le n-pentanol (50µl, 1éq.) et l'acide camphre sulfonique (107mg, 1éq.). Le milieu réactionnel est agité sous argon à 30°C jusqu'à conversion totale du monomère établie à partir de la RMN, soit 33 min.
Conversion : 100%
RMN¹H : DP = 9
GPC : Mₙ = 1890 g/mol, PDI = 1,22

Ces exemples montrent qu'il est possible d'obtenir en moins d'une heure et dans des conditions douces des polycaprolactones ayant des masses moléculaires relativement faibles et en moins de 7 heures des polycaprolactones ayant des masses moléculaires supérieures à 15.000 g/mol.

### Exemple 2 : Préparation d'homopolymères de la δ-valérolactone

A une solution de δ-valérolactone (500µl, 40éq., 0,9 mol.l⁻¹) dans le toluène (5,5ml), sont ajoutés successivement le n-pentanol (15µl, 1éq.) et l'acide trifluorométhanesulfonique (12µl, 1éq.). Le milieu réactionnel est agité sous argon à 30°C jusqu'à conversion élevée (> 90%) du monomère établie à partir de la RMN, soit 15min.
Conversion : 93%
RMN ¹H: DP = 36
GPC : Mₙ = 5.800 g/mol, PDI = 1,15

### Exemple 3 (comparatif) : Influence du solvant

A une solution d'ε-caprolactone (500 µl, 40éq., 0,9 mol.l⁻¹) dans le dichlorométhane (4,5 ml), sont ajoutés successivement le n-pentanol (12 µl, 1éq.) et l'acide trifluorométhanesulfonique (10 µl, 1éq.). Le milieu réactionnel est agité sous argon à 30°C jusqu'à conversion totale du monomère établie à partir de la RMN. La durée de réaction jusqu'à conversion totale est de 7h alors qu'elle n'est que d'1h30 dans le cas où le toluène est utilisé comme solvant dans les mêmes conditions.

Les caractéristiques du polymère obtenu sont les suivantes :
RMN¹H : DP = 30
GPC : Mₙ = 6.260 g/mol, PDI = 1,22

Cet exemple montre que la réaction de polymérisation est bien plus rapide dans un solvant organique non chloré.

## Revendications

1. Procédé de préparation d'une polylactone ou polylactame, comprenant l'étape consistant à faire réagir une lactone ou lactame avec un amorceur **caractérisé en ce que** l'amorceur est choisi parmi l'isorbide, le xylitol, le mannitol, le maltitol, l'érythritol, le fructose, le ribose et le glucose, le méthane thiol, le n-propyl mercaptan, l'isopropyl mercaptan, le butyl mercaptan, le pentyl mercaptan, le n-octyl mercaptan, le t-nonyl mercaptan, le n-dodécyl mercaptan, le t-dodécyl mercaptan, le 2-mercaptoéthanol, le 2-(4-méthylcyclohex-3-ényl) propane-2-thiol et leurs mélanges, le dit procédé étant conduit dans un solvant aromatique non chloré, en présence d'un acide sulfonique de formule R-SO₃H où R désigne :
- un groupe alkyle linéaire renfermant de 1 à 20 atomes de carbone ou un groupe alkyle ramifié ou cyclique renfermant de 3 à 20 atomes de carbone, éventuellement substitués par un ou plusieurs substituants indépendamment choisis parmi des groupes oxo et halo, comme par exemple le fluor, le chlore, le brome ou l'iode, ou
- un groupe aryle éventuellement substitué par au moins :
• un substituant alkyle linéaire renfermant de 2 à 20 atomes de carbone ou un groupe alkyle ramifié ou cyclique renfermant de 3 à 20 atomes de carbone, ledit substituant alkyle étant lui-même éventuellement substitué par au moins un groupement halogéné choisi parmi le fluor, le chlore, le brome ou l'iode ou par un groupement nitro, ou
• un groupement halogéné choisi parmi le fluor, le chlore, le brome ou l'iode, ou
• un groupement nitro, ou
• un groupement CR₁R₂R₃ où R₁ désigne un atome d'halogène et R₂, R₃ désignent indépendamment un atome d'hydrogène ou un atome d'halogène.

2. Procédé selon la revendication 1, **caractérisé en ce que** la lactone est choisie parmi : la ε-caprolactone, la δ-valérolactone, la β-butyrolactone et la γ-butyrolactone.

3. Procédé selon la revendication 2, **caractérisé en ce que** la lactone est l'ε-caprolactone.

4. Procédé selon la revendication 1, **caractérisé en ce que** la lactame est choisie parmi : la caprolactame, l'énantholactame, la laurinlactame, la pyrrolidinone et la pipéridone.

5. Procédé selon l'une quelconque des revendications 1 à 4, **caractérisé en ce qu'**il est réalisé en milieu anhydre.

6. Procédé selon l'une quelconque des revendications 1 à 5, **caractérisé en ce que** l'acide sulfonique est l'acide (trifluoro)méthane sulfonique.

7. Procédé selon l'une quelconque des revendications 1 à 6, **caractérisé en ce que** le rapport molaire de la lactone ou lactame à l'amorceur va de 5 à 500, de préférence de 10 à 200 et plus préférentiellement de 40 à 100.

8. Procédé selon l'une quelconque des revendications 1 à 7, **caractérisé en ce que** le solvant non chloré est un solvant aromatique tel que le toluène, l'éthylbenzène ou le xylène.

9. Procédé selon l'une quelconque des revendications 1 à 8, **caractérisé en ce que** le rapport molaire de l'acide sulfonique de formule R-SO₃H à chaque fonction hydroxyle ou thiol de l'amorceur est de 1.

10. Procédé selon l'une quelconque des revendications 1 à 9, **caractérisé en ce qu'**il est mis en oeuvre à une température allant de 20 à 105°C, plus préférentiellement de 25°C à 65°C et, mieux, de 25°C à 50°C.

11. Procédé selon l'une quelconque des revendications 1 à 10, **caractérisé en ce qu'**il ne met pas en oeuvre d'espèce métallique.

## Patentansprüche

1. Verfahren zur Herstellung eines Polylactons oder Polylactams, bei dem man ein Lacton oder Lactam mit einem Initiator umsetzt, **dadurch gekennzeichnet, dass** der Initiator aus Isosorbid, Xylitol, Mannitol, Maltitol, Erythritol, Fructose, Ribose und Glucose, Methanthiol, n-Propylmercaptan, Isopropylmercaptan, Butylmercaptan, Pentylmercaptan, n-Octylmercaptan, t-Nonylmercaptan, n-Dodecylmercaptan, t-Dodecylmercaptan, 2-Mercaptoethanol, 2-(4-Methylcyclohex-3-enyl)-propan-2-thiol und Mischungen davon ausgewählt wird, wobei das Verfahren in einem nichtchlorierten aromatischen Lösungsmittel in Gegenwart einer Sulfonsäure der Formel R-SO₃H durchgeführt wird, wobei R für
- eine lineare Alkylgruppe mit 1 bis 20 Kohlenstoffatomen oder eine verzweigte oder cyclische Alkylgruppe mit 3 bis 20 Kohlenstoffatomen, wobei die Gruppen gegebenenfalls durch einen oder mehrere unabhängig voneinander aus Oxo- und Halogengruppen, wie beispielsweise Fluor, Chlor, Brom oder Iod, ausgewählte Substituenten substituiert sind, oder
- eine Arylgruppe, die gegebenenfalls durch mindestens
• einen linearen Alkylsubstituenten mit 2 bis 20 Kohlenstoffatomen oder eine verzweigte oder cyclische Alkylgruppe mit 3 bis 20 Kohlenstoffatomen, wobei der Alkylsubstituent gegebenenfalls selbst durch mindestens eine aus Fluor, Chlor, Brom oder Iod ausgewählte Halogengruppe oder durch eine Nitrogruppe substituiert ist, oder
• eine aus Fluor, Chlor, Brom oder Iod ausgewählte Halogengruppe oder
• eine Nitrogruppe oder
• eine CR₁R₂R₃-Gruppe, wobei R₁ für ein Halogenatom steht und R₂ und R₃ unabhängig voneinander für ein Wasserstoffatom oder ein Halogenatom stehen,
substituiert ist,
steht.

2. Verfahren nach Anspruch 1, **dadurch gekennzeichnet, dass** das Lacton aus ε-caprolacton, δ-Valerolacton, β-butyrolacton und γ-Butyrolacton ausgewählt wird.

3. Verfahren nach Anspruch 2, **dadurch gekennzeichnet, dass** es sich bei dem Lacton um ε-Caprolacton handelt.

4. Verfahren nach Anspruch 1, **dadurch gekennzeichnet, dass** das Lactam aus Caprolactam, Oenantholactam, Laurinlactam, Pyrrolidinon und Piperidon ausgewählt wird.

5. Verfahren nach einem der Ansprüche 1 bis 4, **dadurch gekennzeichnet, dass** es in wasserfreiem Medium durchgeführt wird.

6. Verfahren nach einem der Ansprüche 1 bis 5, **dadurch gekennzeichnet, dass** es sich bei der Sulfonsäure um (Trifluor)Methansulfonsäure handelt.

7. Verfahren nach einem der Ansprüche 1 bis 6, **dadurch gekennzeichnet, dass** das Molverhältnis von Lacton bzw. Lactam zu Initiator im Bereich von 5 bis 500, vorzugsweise 10 bis 200 und weiter bevorzugt 40 bis 100 liegt.

8. Verfahren nach einem der Ansprüche 1 bis 7, **dadurch gekennzeichnet, dass** es sich bei dem nichtchlorierten Lösungsmittel um ein aromatisches Lösungsmittel wie Toluol, Ethylbenzol oder Xylol handelt.

9. Verfahren nach einem der Ansprüche 1 bis 8, **dadurch gekennzeichnet, dass** das Molverhältnis von Sulfonsäure der Formel R-SO₃H zu jeder Hydroxyl- oder Thiolfunktion des Initiators 1 beträgt.

10. Verfahren nach einem der Ansprüche 1 bis 9, **dadurch gekennzeichnet, dass** es bei einer Temperatur im Bereich von 20 bis 105°C, weiter bevorzugt von 25°C bis 65°C und noch besser von 25°C bis 50°C durchgeführt wird.

11. Verfahren nach einem der Ansprüche 1 bis 10, **dadurch gekennzeichnet, dass** dabei keine Metallspezies zum Einsatz kommt.

## Claims

1. Process for the preparation of a polylactone or polylactam, comprising the stage consisting in reacting a lactone or lactam with an initiator, **characterized in that** the initiator is chosen from isosorbide, xylitol, mannitol, maltitol, erythritol, fructose, ribose and glucose, methanethiol, n-propyl mercaptan, isopropyl mercaptan, butyl mercaptan, pentyl mercaptan, n-octyl mercaptan, t-nonyl mercaptan, n-dodecyl mercaptan, t-dodecyl mercaptan, 2-mercaptoethanol, 2-(4-methylcyclohex-3-enyl)propane-2-thiol and their mixtures, said process being carried out in a nonchlorinated aromatic solvent in the presence of a sulfonic acid of formula R-SO₃H, where R denotes:
- a linear alkyl group including from 1 to 20 carbon atoms or a branched or cyclic alkyl group including from 3 to 20 carbon atoms which are optionally substituted by one or more substituents chosen independently from oxo and halo groups, such as, for example, fluorine, chlorine, bromine or iodine, or
- an aryl group optionally substituted by at least:
• one linear alkyl substituent including from 2 to 20 carbon atoms or one branched or cyclic alkyl group including from 3 to 20 carbon atoms, said alkyl substituent being itself optionally substituted by at least one halogen group chosen from fluorine, chlorine, bromine or iodine or by a nitro group, or
• one halogen group chosen from fluorine, chlorine, bromine or iodine, or
• one nitro group, or
• one CR₁R₂R₃ group, where R₁ denotes a halogen atom and R₂ and R₃ independently denote a hydrogen atom or a halogen atom.

2. Process according to Claim 1, **characterized in that** the lactone is chosen from ε-caprolactone, δ-valerolactone, β-butyrolactone and γ-butyrolactone.

3. Process according to Claim 2, **characterized in that** the lactone is ε-caprolactone.

4. Process according to Claim 1, **characterized in that** the lactam is chosen from caprolactam, enantholactam, laurinlactam, pyrrolidinone and piperidone.

5. Process according to any one of Claims 1 to 4, **characterized in that** it is carried out in an anhydrous medium.

6. Process according to any one of Claims 1 to 5, **characterized in that** the sulfonic acid is (trifluoro)methanesulfonic acid.

7. Process according to any one of Claims 1 to 6, **characterized in that** the molar ratio of the lactone or lactam to the initiator ranges from 5 to 500, preferably from 10 to 200 and more preferably from 40 to 100.

8. Process according to any one of Claims 1 to 7, **characterized in that** the nonchlorinated solvent is an aromatic solvent, such as toluene, ethylbenzene or xylene.

9. Process according to any one of Claims 1 to 8, **characterized in that** the molar ratio of the sulfonic acid of formula R-SO₃H to each hydroxyl or thiol functional group of the initiator is 1.

10. Process according to any one of Claims 1 to 9, **characterized in that** it is carried out at a temperature ranging from 20°C to 105°C, more preferably from 25°C to 65°C and better still from 25°C to 50°C.

11. Process according to any one of Claims 1 to 10, **characterized in that** it does not employ a metal entity.
